# EUROPÄISCHE PATENTSCHRIFT

(11) **EP 3 181 245 B1**
(45) Veröffentlichungstag und Bekanntmachung des Hinweises auf die Patenterteilung: **22.07.2020**
(21) Anmeldenummer: 16203175.1
(22) Anmeldetag: 09.12.2016
(51) Int. Cl.: B05B 15/65, B05C 17/005, A01M 7/00, B05B 1/00

(54) **DÜSENANORDNUNG FÜR FLIESSFÄHIGE SUBSTANZEN**
NOZZLE ASSEMBLY FOR FLOWING SUBSTANCES
DISPOSITIF DE BUSE POUR SUBSTANCES FLUIDES

(30) Priorität: 14.12.2015 DE 102015121762
(43) Veröffentlichungstag der Anmeldung: 21.06.2017
(73) Patentinhaber: agrotop GmbH, 93083 Obertraubling (DE)
(72) Erfinder: Graef, Steffen, 93083 Obertraubling (DE)
(74) Vertreter: Bittner, Bernhard

(56) Entgegenhaltungen:
- US-A- 28 694
- US-A- 5 104 013

## Beschreibung

Die vorliegende Erfindung bezieht sich auf eine Düsenanordnung. Die Erfindung wird unter Bezugnahme auf Düsen beschrieben, die insbesondere im Bereich der Landwirtschaft Anwendung finden können. Dabei kann mittels solcher Düsen beispielweise ein (insbesondere flüssiges) Düngemittel, aber auch evtl. Pestizide oder andere Substanzen aufgebracht werden. Zu diesem Zweck weisen landwirtschaftliche Maschinen oftmals Leitungssysteme auf, an denen derartige Düsen angeordnet werden können, um so das Düngemittel auszubringen.

Dabei kann es aus unterschiedlichsten Gründen erforderlich sein, die eigentlichen Düsen zu wechseln, etwa weil die aufzubringende Substanz geändert wird oder auch weil die Art der Aufbringung geändert werden soll. Im Stand der Technik werden zu diesem Zweck von einer Vielzahl von Leitungen jeweils die Düsen bzw. die Düsenköpfe abgenommen und beispielsweise in einer Lagerbox abgelegt. Dieser Vorgang ist oftmals relativ umständlich. Einerseits können Bestandteile der einzelnen Düsen, wie etwa Dichtungsringe verloren gehen. Andererseits ist auch, gerade bei häufigem Wechseln ein Wiederanbringen anderer Düsen relativ aufwendig. Der Benutzer muss zu diesem Zweck die einzelnen Düsen jeweils greifen, richtig orientieren und an die Flüssigkeitsausgänge anbringen.

Die US 5 104 013 A offenbart einen Adapter für eine Dichtstoff-Tube. Der Adapter beinhaltet eine reduzierende Kupplung mit einem größeren Ende, das an der Dichtstoff-Tuben-Düse befestigt ist, einem kleineren Ende, das mit einem Gewinde versehen ist und einer Kappe, welche ein innenliegendes Gewinde aufweist, um auf das kleinere Ende der Kupplung aufgeschraubt zu werden, wodurch das Dichtstoffmaterial innerhalb der Kupplung verschlossen und versiegelt wird, wenn die Dichtstoff-Tube nicht in Gebrauch ist.

Die US 28694 A zeigt eine Düse für einen Wasserschlauch. Bei dieser Düse kann die Düsenaustrittsöffnung durch aufstecken einer weiteren Düse verändert/ verkleinert werden, wodurch die Größe des Wasserstrahls verändert werden kann. Die verschiedenen Düsen werden dabei aufeinander gesteckt und durch einen Bajonett-Verschluss gehalten.

Der vorliegenden Erfindung liegt daher die Aufgabe zugrunde, eine Düsenanordnung zur Verfügung zu stellen, welche schnellere Wechselvorgänge ermöglicht. Daneben soll auch insbesondere bei der Lagerung ein Verlust von Einzelteilen der jeweiligen Düsenanordnungen verhindert werden. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Düsenvorrichtung zur Ausgabe von fließfähigen Substanzen weist einen Träger auf sowie wenigstens ein wenigstens teilweise innerhalb dieses Trägers angeordnetes Düsenelement, welches zur Ausgabe der fließfähigen Substanz geeignet und bestimmt ist. Weiterhin weist die Düsenvorrichtung eine erste Kopplungseinrichtung auf, um die Düsenvorrichtung lösbar an einer Zuführeinrichtung für die fließfähige Substanz anzuordnen.

Erfindungsgemäß weist die Düsenvorrichtung eine zweite Kopplungseinrichtung auf, um die Düsenvorrichtung lösbar an einer weiteren Düsenvorrichtung und insbesondere einer Düsenvorrichtung der gleichen Art zu befestigen.

Es wird daher im Rahmen der Erfindung vorgeschlagen, dass - insbesondere zu Lagerungszwecken - mehrere Düsenvorrichtungen mittels der beschriebenen Kopplungseinrichtung aneinander befestigt werden können. In diesem Fall kann der Benutzer, sobald ein Wechsel nötig ist, einzelne Düsenvorrichtungen abnehmen und mit weiteren Düsenvorrichtungen verbinden. Auf diese Weise wird die Gefahr minimiert, dass Einzelteile der Düsenanordnungen bzw. Düsenvorrichtungen verloren gehen. Auch kann ein Wiederanbringen der Düsenvorrichtungen z.B. an einer landwirtschaftlichen Maschine vereinfacht werden. Dabei wäre es möglich, dass jeweils mehrere Düsenvorrichtungen aneinandergesteckt bzw. aneinander befestigt gelagert werden und einzeln an entsprechende Leitungen der Maschine aufgeschraubt und/oder aufgesteckt werden.

Bei der Zuführeinrichtung kann es sich beispielsweise um eine Leitung, insbesondere eine Rohrleitung handeln, über welche eine Flüssigkeit ausgegeben wird. Die Düsenvorrichtung kann an dieser Leitung angeordnet werden. Dabei wird bevorzugt ein Endabschnitt dieser Zuführleitung in die Düsenvorrichtung eingeschoben. Auch können an diesem Endabschnitt der Zuführleitung Vorsprünge angeordnet sein, welche in Ausnehmungen der Düsenvorrichtung eingreifen so dass diese lösbar an der Zuführleitung befestigt werden kann.

Durch die erfindungsgemäß beschriebene Ausgestaltung lassen sich auch mehrere Düsenvorrichtungen aneinander befestigen, so dass insgesamt eine Stange entsteht, welche sich aus einer Vielzahl von Düsenvorrichtungen zusammensetzt. Auch zum Befestigen dieser Düsenvorrichtungen können die einzelnen Düsenvorrichtungen wieder von dieser Stange abgedreht werden und an den einzelnen Leitungen angeordnet werden.

Bei einer weiteren vorteilhaften Ausführungsform ist das Düsenelement von dem Träger lösbar. Bevorzugt ist das Düsenelement in wenigstens einen Bereich des Trägers einsteckbar. Bei der aufzutragenden fließfähigen Substanz handelt es sich insbesondere um eine flüssige Substanz, beispielsweise eine Substanz, welche aus einer Gruppe von Substanzen ausgewählt ist, welche Düngemittel, Reinigungsmittel, Pestizide, Fungizide und dergleichen enthält. Bei einer weiteren vorteilhaften Ausführungsform ist wenigstens ein Element der Düsenvorrichtung beispielsweise der Träger und/oder das Düsenelement aus einem Kunststoff gefertigt. Besonders bevorzugt ist dieses wenigstens eine Element aus POM gefertigt. Bei einer weiteren vorteilhaften Ausführungsform handelt es sich bei dem Kunststoff um einen Kunststoff, der haltbar bzw. resistent gegenüber Medien, wie Düngemitteln, Fungiziden oder Pestiziden ist.

Die vorliegende Erfindung ist weiterhin auf eine Düsenanordnung gerichtet, welche wenigstens zwei Düsenvorrichtungen der oben beschriebenen Art aufweist. Vorteilhaft sind diese beiden Düsenvorrichtungen miteinander über die beschriebene Kopplungseinrichtung verbunden. Dabei können die Düsenvorrichtungen dieser Düsenanordnung mittels der ersten Kopplungseinrichtung der ersten Düsenvorrichtung und der zweiten Kopplungseinrichtung der zweiten Düsenvorrichtung miteinander verbunden sein.

Bei einer weiteren vorteilhaften Ausführungsform ist das Düsenelement selbst wenigstens zweiteilig ausgebildet. So könnte das Düsenelement eine Ausgabeeinrichtung aufweisen, welche die fließfähige Substanz ausgibt sowie auch ein weiteres von diesem Ausgabeelement trennbares Element.

Bei einer weiteren vorteilhaften Ausführungsform ist das Düsenelement in einem im Wesentlichen zylinderförmigen Abschnitt des Trägers angeordnet.

Bei einer weiteren vorteilhaften Ausführungsform weist der Träger einen zylinderförmigen Aufnahmeabschnitt auf. Dieser Aufnahmeabschnitt ist bevorzugt derart ausgebildet, dass der oben erwähnte zylinderförmige Abschnitt des Trägers, der zur Aufnahme des Düsenelements dient, in diesen Aufnahmeabschnitt einsetzbar und insbesondere einführbar bzw. einschiebbar ist.

Bei einer weiteren vorteilhaften Ausführungsform weist wenigstens eine Kopplungseinrichtung ein Rastelement auf, welches dazu geeignet und bestimmt ist, in der anderen Kopplungseinrichtung einzurasten.

Bei einer weiteren vorteilhaften Ausführungsform ist in einem zusammengesteckten Zustand zweier Düsenvorrichtungen eine Düsenvorrichtung gegenüber der anderen um einen vorbestimmten Winkel drehbar, insbesondere zum Zwecke des Einrastens bzw. zum Aufheben einer entsprechenden Einrastung. Vorteilhaft ist dabei dieser Winkel größer als 5°, bevorzugt größer als 10°, bevorzugt größer als 15°. Weiterhin ist dieser Winkel bevorzugt kleiner als 180°, bevorzugt kleiner als 150°, bevorzugt kleiner 120°, bevorzugt kleiner 90°, bevorzugt kleiner als 60° und besonders bevorzugt kleiner als 45°. Derartige Winkelbereiche haben sich als ergonomisch günstig erwiesen.

Bevorzugt ist wenigstens die erste Kopplungseinrichtung an dem Träger ausgebildet. Bevorzugt ist wenigstens die zweite Kopplungseinrichtung an dem Träger ausgebildet. Bevorzugt sind beide Kopplungseinrichtungen an dem Träger ausgebildet. Bei einer weiteren vorteilhaften Ausführungsform ist der Träger einteilig ausgebildet.

Vorteilhaft ist der Träger bezüglich wenigstens einer Symmetrieebene symmetrisch. Vorteilhaft ist der Träger bezüglich zweier Symmetrieebenen symmetrisch. Auch ist es möglich, dass der Träger rotationssymmetrisch, insbesondere rotationssymmetrisch bezüglich einer 180° - Drehung ausgebildet ist.

Bei einer weiteren vorteilhaften Ausführungsform wirkt die zweite Kopplungseinrichtung der Düsenvorrichtung mit einer ersten Kopplungseinrichtung einer weiteren Düsenvorrichtung mechanisch zusammen, um zwei Düsenvorrichtungen lösbar aneinander zu befestigen.

Dies bedeutet insbesondere, dass diese beiden ersten und zweiten Kopplungseinrichtungen zweier Düsenvorrichtungen mechanisch miteinander verbindbar sind, um zwei Düsenvorrichtungen lösbar aneinander zu befestigen.

Bei einer weiteren vorteilhaften Ausführungsform ist wenigstens eine Kopplungseinrichtung bezüglich einer Längsrichtung der Düsenvorrichtung endseitig an der Düsenvorrichtung angeordnet. Vorteilhaft handelt es sich bei dieser Längsrichtung der Düsenvorrichtung auch um eine Hauptströmungsrichtung des Fluides, welches aus dem Düsenelement austritt. Vorteilhaft handelt es sich auch bei dieser Längsrichtung um eine Symmetrieachse, bezüglich derer die Düsenvorrichtung rotationssymmetrisch ausgebildet ist.

Bei einer weiteren vorteilhaften Ausführungsform ist auch die zweite Kopplungseinrichtung bezüglich der Längsrichtung endseitig an der Düsenvorrichtung angeordnet. Unter endseitig wird dabei verstanden, dass diese Kopplungseinrichtung nicht notwendigerweise unmittelbar das Ende der Düsenvorrichtung darstellt, dass sie jedoch nur geringfügig von diesem Ende entfernt ist. So ist beispielsweise die erste und/oder die zweite Kopplungseinrichtung in einem bezogen auf die Längsrichtung der Düsenvorrichtung endseitigen Viertel, bevorzugt endseitigen Fünftel, bevorzugt endseitigen Sechstel der jeweiligen Düsenvorrichtung angeordnet.

Bei einer weiteren vorteilhaften Ausführungsform weist die zweite Kopplungseinrichtung wenigstens einen sich in einer radialen Richtung der Düsenvorrichtung erstreckenden Vorsprung auf. Vorteilhaft weist die zweite Kopplungseinrichtung auch einen zweiten entsprechend ausgebildeten Vorsprung auf. Vorteilhaft ist dieser zweite Vorsprung bezüglich der Düsenvorrichtung gegenüberliegend des ersten Vorsprungs angeordnet. Dabei kann bevorzugt dieser Vorsprung in einer Nut eingreifen, welche ein Element der ersten Kopplungseinrichtung darstellt. Bei einer weiteren vorteilhaften Ausführungsform erstreckt sich die besagte Nut in einer Umfangsrichtung der Düsenvorrichtung. Vorteilhaft erstreckt sich diese Nut wenigstens abschnittsweise schräg bezüglich einer Umfangsrichtung bzw. bezüglich einer Ebene, welche senkrecht zu der Längsrichtung steht.

Bei einer weiteren vorteilhaften Ausführungsform weist die Kopplungsvorrichtung wenigstens eine Ausnehmung und bevorzugt zwei Ausnehmungen auf, welche ein Einstecken wenigstens eines Vorsprungs und bevorzugt wenigstens zweier Vorsprünge (einer anderen Düsenvorrichtung) in der Längsrichtung ermöglicht/ermöglichen.

Bei einer weiteren vorteilhaften Ausführungsform bilden eine erste Kopplungseinrichtung einer ersten Düsenvorrichtung und eine zweite Kopplungseinrichtung einer zweiten Düsenvorrichtung gemeinsam eine bajonettartige Verbindung aus. Es wären jedoch auch andere Verbindungen denkbar, wie beispielsweise Schraubverbindungen oder Schnappverbindungen. Bajonettartige Verbindungen haben sich jedoch für die hier vorliegende Anwendung als besonders günstig erwiesen. Einerseits erlauben diese eine relativ schnelle und auch dichte Befestigung der Düsenvorrichtungen an einer Leitung. Andererseits erlaubt eine derartige bajonettartige Verbindung auch ein sehr schnelles Abnehmen oder Aufstecken der Düsenvorrichtungen auf eine Leitung oder auf eine andere Düsenvorrichtung. In der Anwendung kann der Benutzer beispielsweise eine Anordnung aus fünf oder sechs Düsenvorrichtungen nehmen und jeweils dann die einzelnen Düsenvorrichtungen auf die unterschiedlichen Leitungen einer Maschine aufschrauben und/oder aufstecken und/oder aufschieben.

Bei einer weiteren vorteilhaften Ausführungsform weist die Düsenvorrichtung ein ringförmiges Dichtungselement auf. Vorteilhaft ist dieses Dichtungselement im Inneren des Trägers angeordnet und liegt besonders bevorzugt an einem Abschnitt des Düsenelements an. Vorteilhaft ist dieses ringförmige Dichtungselement in dem oben erwähnten Aufnahmeabschnitt angeordnet, in den auch beispielsweise die oben erwähnte Zuführleitung eingeschoben werden kann oder auch beim Zusammenbauen mehrerer Düsenvorrichtungen eine weitere Düsenvorrichtung.

Vorteilhaft handelt es sich bei dem ringförmigen Dichtungselement um ein o-ringartiges Element. Insbesondere handelt es sich bei dem Dichtungselement um ein elastisches Dichtungselement, welches insbesondere in der oben besagten Längsrichtung der Düsenvorrichtung elastisch ist.

Bei einer weiteren vorteilhaften Ausführungsform ist das Dichtungselement in einem zusammengesetzten Zustand zweier Düsenvorrichtungen zwischen diesen zwei Düsenvorrichtungen einklemmbar. Auf diese Weise kann verhindert werden, dass das Dichtungselement verloren geht, wenn zwei Düsenvorrichtungen aneinandergesteckt sind. Weiterhin kann dieses Dichtungselement durch seine Elastizität auch einen Halt der beiden Dichtungsvorrichtungen miteinander verbessern. Wie oben erwähnt, ist diese Elastizität insbesondere in der Längsrichtung des Dichtungselements gegeben.

Bei einer weiteren vorteilhaften Ausführungsform ist an dem Träger wenigstens ein radial vorstehender Vorsprung angeordnet, der ein manuelles Drehen des Trägers ermöglicht. Vorteilhaft sind an dem Träger zwei derartige radial vorstehende Vorsprünge angeordnet. Besonders bevorzugt sind diese Vorsprünge flügelartig ausgebildet, um so ein Drehen einer Düsenvorrichtung leichter auch manuell zu ermöglichen. Vorteilhaft sind diese beiden Vorsprünge bezüglich der oben erwähnten Längsrichtung der Düsenvorrichtung um einen vorgegeben Winkel, beispielweise um 90° gegenüber den erstgenannten Vorsprüngen, die als Kopplungseinrichtung dienen, verdreht.

Weitere Vorteile und Ausführungsformen ergeben sich aus den beigefügten Zeichnungen.

Darin zeigen:
- Fig. 1: eine Darstellung zweier ineinander gesteckter Düsenvorrichtungen;
- Fig. 2: eine Außenansicht zweier ineinander gesteckter Düsenvorrichtungen;
- Fig. 3: ein Träger einer Düsenvorrichtung;
- Fig. 4: eine Ansicht der Düsenvorrichtung entlang ihrer Längsrichtung; und
- Fig. 5: eine weitere Außenansicht eines Trägers einer erfindungsgemäßen Düsenvorrichtung.

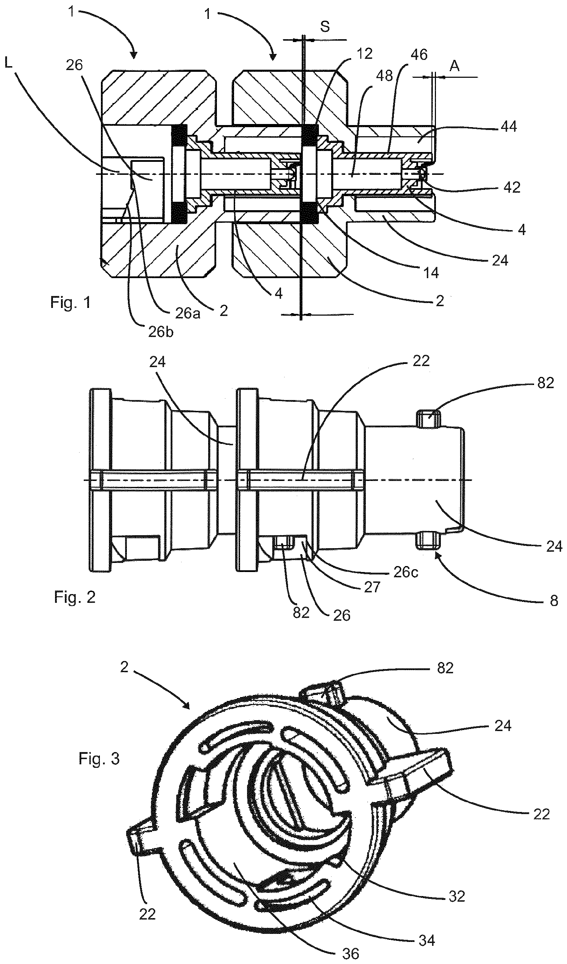

Fig. 1 zeigt eine Darstellung zweier ineinander gesteckter erfindungsgemäßer Düsenvorrichtungen 1. Diese beiden dargestellten Düsenvorrichtungen 1 weisen dabei jeweils einen Träger 2 auf sowie ein in diesen Träger aufgenommenes Düsenelement 4. Man erkennt dabei, dass dieses Düsenelement 4 vollständig von einem Aufnahmevorsprung 24 des Trägers 2 umgeben ist. Das Düsenelement 4 wiederum ist zweiteilig ausgebildet und weist einen Auslass 42 auf. Das Bezugszeichen 46 kennzeichnet einen Grundkörper des Düsenelements 4.

Das Bezugszeichen 44 kennzeichnet eine Ausnehmung, insbesondere eine umlaufende Ausnehmung, welche in einem eingesetzten Zustand das Düsenelement umgibt. Das Bezugszeichen A kennzeichnet einen Abstand um den das Düsenelement 4 bezüglich dem Träger 2 bzw. gegenüber der Aufnahmeausnehmung bzw. dem Aufnahmevorsprung 24 zurückversetzt ist.

Das Bezugszeichen 12 kennzeichnet ein Dichtungselement welches im Benutzungszustand gegenüber einer Leitung, welche das fließfähige Medium ausgibt angepresst werden kann, um so einen Dichteffekt zu erreichen. Das Bezugszeichen 14 kennzeichnet einen ringförmigen Sitz bzw. eine ringförmige Anlagefläche, an welche das Dichtungselement 12 angelegt werden kann. In der Einbaulage kann das Dichtungselement 12 zwischen diesem Sitz 14 und etwa einem Mündungsrand einer Leitung eingeklemmt werden

In dem in Fig. 1 gezeigten zusammengesteckten Zustand wird dieses Dichtungselement wiederum von einem Rand der Aufnahmeausnehmung 24 der zweiten Düsenvorrichtung 1 (hier der linksseitigen Düsenvorrichtung 1) eingeklemmt, und kann so nicht verloren gehen. Dadurch, dass das Düsenelement selbst gegenüber der Aufnahmeausnehmung 24 und im Bereich zurückversetzt ist, wird das Düsenelement bzw. dessen Ende (bzw. der Auslass 42) nicht das weitere Element d.h. der Grundkörper 46 und/oder einen Bereich der zweiten Düsenvorrichtung 1 kontaktieren.

Das Bezugszeichen 26 kennzeichnet eine Ausnehmung, welche Bestandteil der ersten Kopplungseinrichtung der Düsenvorrichtung 1 ist. Diese Ausnehmung weist einen geradlinig verlaufenden Randabschnitt 26a und einen schräg verlaufenden Randabschnitt 26b auf. Dabei sind die Begriffe "gerade" und schräg jeweils gegenüber einer Kreislinie definiert, welche senkrecht zu der Längsrichtung der Düsenvorrichtung 1 dient. Der schräg verlaufende Abschnitt 26b dient bei einer Relativdrehung zweier Düsenvorrichtungen 1 bezüglich einander dazu, um die beiden Düsenvorrichtungen aufeinander zuzudrängen und so aneinander zu befestigen.

Das Bezugszeichen S kennzeichnet einen Abstand, der angibt, um welchen Bereich des Dichtungselements beim Zusammenstecken zweier Düsenvorrichtungen zusammengequetscht bzw. eingeklemmt wird. Das Bezugszeichen 48 kennzeichnet ein Kolbenelement bzw. ein Düsenmundstück, welches in dem Düsenelement angeordnet ist. Dabei ist dieses Kolbenelement 48 in der Längsrichtung L beweglich gegenüber dem Grundkörper 46 des Düsenelements. Daneben bildet der Grundkörper 46 eine Ausnehmung, insbesondere eine zylinderförmige Ausnehmung auf, die zur Aufnahme eines Abschnitts dieses Kolbenelements 48 geeignet und bestimmt ist.

Fig. 2 zeigt eine Außenansicht zweier ineinander gesteckter Düsenvorrichtungen 1. Man erkennt, dass an der Aufnahmeausnehmung 24 (genauer an deren Außenumfang bzw. der Wandung der Aufnahmeausnehmung) die zweite Kopplungseinrichtung vorgesehen ist, wobei diese hier auch durch zwei Vorsprünge 82 ausgebildet ist, welche sich in einer radialen Richtung bzw. in einer zu der Längsrichtung L senkrechten Richtung erstrecken.

Das Bezugszeichen 22 kennzeichnet einen Flügel bzw. einen Vorsprung der ein manuelles Drehen einer Düsenvorrichtung bezüglich der Längsrichtung L ermöglicht. Weiterhin erkennt man hier auch einen weiteren Vorsprung 82 der Bestandteil der zweiten Kopplungseinrichtung 8 ist, wobei dieser Vorsprung 82 in eine Ausnehmung 26 der rechts dargestellten Düsenvorrichtung eingreift.

Man erkennt jedoch, dass zwischen dem Vorsprung 82 und dem Rand 26c der Ausnehmung ein Spiel bzw. ein sich in der Längsrichtung L erstreckender Zwischenraum gebildet wird. Dieser Zwischenraum stellt sicher, dass zwei Düsenvorrichtungen zum Zusammenfügen bequem bezüglich einander (und bezüglich der Längsrichtung L) gedreht werden können.

Fig. 3 zeigt eine perspektivische Darstellung eines Trägers 2. Hierbei sind wieder die Vorsprünge 82 erkennbar, die an der Aufnahmeausnehmung 24 (genauer an der Wandung der Aufnahmeausnehmung 24) angeordnet sind. Des Weiteren erkennt man auch die Ausnehmung 32, die beim Zusammenstecken zweier Düsenvorrichtungen zur Aufnahme der Aufnahmeausnehmung 24 dient. Die Bezugszeichen 32 beziehen sich auf Ausnehmungen, welche zur Aufnahme der Vorsprünge 82 dienen. Daneben sind auch Ausnehmungen 34 vorgesehen, die der Gewichtsreduzierung und auch der Erhöhung der Stabilität dienen. Auch sind hier wieder die beiden Flügel erkennbar, die zum Greifen bzw. zum manuellen Drehen der Düsenanordnung dienen. Auch mittels dieser Flügel 22 kann eine Düsenvorrichtung (durch Drehung bezüglich der Längsachse) leicht und insbesondere manuell an einer anderen Düsenvorrichtung befestigt werden.

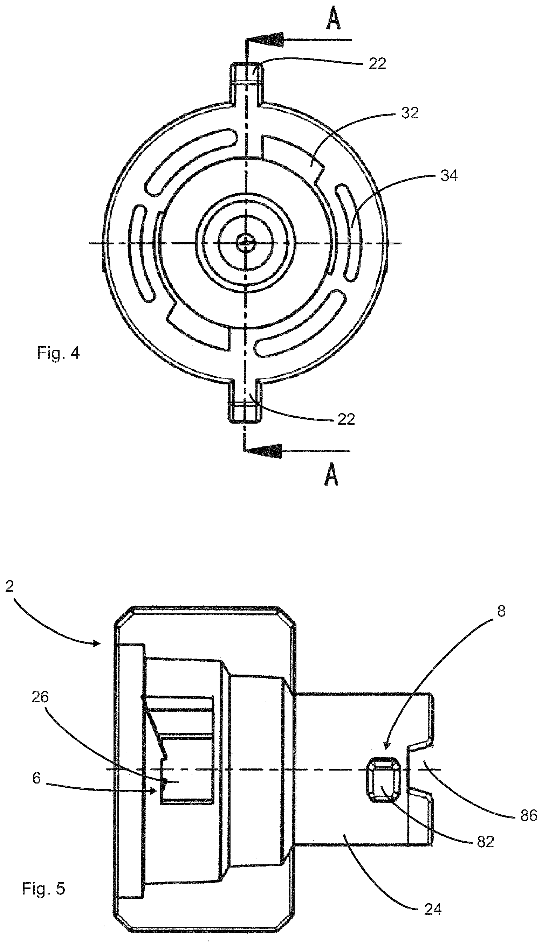

Fig. 4 zeigt eine Draufsicht entlang der Längsrichtung L (die hier senkrecht zur Figurenebene verläuft), auf eine erfindungsgemäße Düsenvorrichtung 1. Erkennbar sind wieder die Vorsprünge bzw. Flügel 22, die zum Drehen der Düsenvorrichtung 1 dienen. Daneben sind auch die Ausnehmungen 32 und 34 erkennbar.

Fig. 5 schließlich zeigt eine weitere Seitenansicht einer erfindungsgemäßen Vorrichtung. Bei dieser Darstellung sind insbesondere auch die beiden Kopplungseinrichtung 6 und 8 erkennbar, welche gemeinsam einen bajonettartigen Verschluss ausbilden. Die Kopplungseinrichtung 8 ist, wie oben erwähnt, durch die beiden Vorsprünge 82 gebildet und die Kopplungseinrichtung 6 durch die Ausnehmung 26, welche den schrägen Abschnitt 26b aufweist, der zum bajonettartigen Verbinden der beiden Düsenvorrichtungen dient.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Düsenvorrichtung
- 2: Träger
- 4: Düsenelement, Ausnehmung
- 6,8: Kopplungseinrichtung
- 12: Dichtungselement, Vorsprünge
- 22: Flügel, Vorsprung
- 24: Aufnahmevorsprung, Aufnahmeausnehmung
- 26: Ausnehmung
- 26a: geradliniger Abschnitt
- 26b: Schrägabschnitt
- 32: Ausnehmungen
- 34: Ausnehmungen
- 36: Ausnehmung
- 42: Auslass, Düsenelement
- 44: (umlaufende) Ausnehmung
- 46: Grundkörper des Düsenelements 4
- 48: Kolbenelement
- 82: Vorsprung
- A: Abstand
- L: Längsrichtung
- S: Abstand

## Patentansprüche

1. Düsenvorrichtung (1) zur Ausgabe von fließfähigen Substanzen mit einem Träger (2) und einem wenigstens teilweise innerhalb dieses Trägers angeordneten Düsenelement (4) welches zur Ausgabe der fließfähigen Substanz geeignet und bestimmt ist, und mit einer ersten Kopplungseinrichtung (6), um die Düsenvorrichtung (1) lösbar an einer Zuführeinrichtung für die fließfähige Substanz anzuordnen
**dadurch gekennzeichnet, dass**
die Düsenvorrichtung (1) eine zweite Kopplungseinrichtung (8) aufweist, um die Düsenvorrichtung (1) lösbar an einer weiteren Düsenvorrichtung (1) zu befestigen, wobei in dem Düsenelement (4) ein Kolbenelement (48) angeordnet ist und dieses Kolbenelement (48) in der Längsrichtung (L) der Düsenvorrichtung (1) beweglich ist.

2. Düsenvorrichtung (1) nach Anspruch 1,
**dadurch gekennzeichnet, dass**
wenigstens eine Kopplungseinrichtung (6,8) an dem Träger (2) angeordnet ist.

3. Düsenvorrichtung (1) nach wenigstens einem der vorangegangenen Ansprüche,
**dadurch gekennzeichnet, dass**
die zweite Kopplungseinrichtung (6) mit der ersten Kopplungseinrichtung (8) mechanisch zusammenwirkt, um zwei Düsenvorrichtungen (1) lösbar aneinander zu befestigen.

4. Düsenvorrichtung (1) nach wenigstens einem der vorangegangenen Ansprüche,
**dadurch gekennzeichnet, dass**
wenigstens eine Kopplungseinrichtung (6, 8) bezüglich einer Längsrichtung (L) der Düsenvorrichtung (1) endseitig an der Düsenvorrichtung (1) angeordnet ist.

5. Düsenvorrichtung (1) nach Anspruch 4,
**dadurch gekennzeichnet, dass**
die zweite Kopplungseinrichtung (8, 6) bezüglich der Längsrichtung ebenfalls endseitig an der Düsenvorrichtung (1) angeordnet ist.

6. Düsenvorrichtung (1) nach wenigstens einem der vorangegangenen Ansprüche,
**dadurch gekennzeichnet, dass**
die zweite Kopplungseinrichtung (8) wenigstens einen sich in einer radialen Richtung der Düsenvorrichtung (1) erstreckenden Vorsprung (82) aufweist.

7. Düsenvorrichtung (1) nach wenigstens einem der vorangegangenen Ansprüche,
**dadurch gekennzeichnet, dass**
die erste Kopplungseinrichtung (6) und die zweite Kopplungseinrichtung (8) gemeinsam eine bajonettartige Verbindung ausbilden.

8. Düsenvorrichtung (1) nach wenigstens einem der vorangegangenen Ansprüche,
**dadurch gekennzeichnet, dass**
die Düsenvorrichtung (1) ein ringförmiges Dichtungselement (12) aufweist.

9. Düsenvorrichtung (1) nach Anspruch 8,
**dadurch gekennzeichnet, dass**
das Dichtungselement (12) in einem zusammengesetzten Zustand zweier Düsenvorrichtungen (1) zwischen den beiden Düsenvorrichtungen (1) einklemmbar ist.

10. Düsenvorrichtung (1) nach wenigstens einem der vorangegangenen Ansprüche,
**dadurch gekennzeichnet, dass**
an dem Träger (2) wenigstens ein radial vorstehender Vorsprung (22) angeordnet ist, der ein manuelles Drehen des Trägers (2) ermöglicht.

## Claims

1. Nozzle device (1) for dispensing flowable substances, having a support (2) and a nozzle element (4) arranged at least in part within this support, which element is suitable and intended for dispensing the flowable substance, and having a first coupling means (6), in order to arrange the nozzle device (1) detachably on a supply means for the flowable substance,
**characterised in that**
the nozzle device (1) has a second coupling means (8) in order to fasten the nozzle device (1) detachably to a further nozzle device (1), wherein a piston element (48) is arranged within the nozzle element (4) and this piston element (48) is moveable in the longitudinal direction (L) of the nozzle device (1).

2. Nozzle device (1) according to claim 1,
**characterised in that**
at least one coupling means (6, 8) is arranged on the support (2).

3. Nozzle device (1) according to at least one of the preceding claims,
**characterised in that**
the second coupling means (6) cooperates mechanically with the first coupling means (8) in order to fasten two nozzle devices (1) detachably to each other.

4. Nozzle device (1) according to at least one of the preceding claims,
**characterised in that**
at least one coupling means (6, 8) is arranged at the end on the nozzle device (1) with respect to a longitudinal direction (L) of the nozzle device (1).

5. Nozzle device (1) according to claim 4,
**characterised in that**
the second coupling means (8, 6) is likewise arranged at the end on the nozzle device (1) with respect to the longitudinal direction.

6. Nozzle device (1) according to at least one of the preceding claims,
**characterised in that**
the second coupling means (8) has at least one projection (82) extending in a radial direction of the nozzle device (1).

7. Nozzle device (1) according to at least one of the preceding claims,
**characterised in that**
the first coupling means (6) and the second coupling means (8) jointly form a bayonet-like connection.

8. Nozzle device (1) according to at least one of the preceding claims,
**characterised in that**
the nozzle device (1) has an annular sealing element (12).

9. Nozzle device (1) according to claim 8,
**characterised in that**
the sealing element (12) in an assembled state of two nozzle devices (1) can be clamped between the two nozzle devices (1).

10. Nozzle device (1) according to at least one of the preceding claims,
**characterised in that**
at least one radially protruding projection (22) is arranged on the support (2), which projection permits manual turning of the support (2).

## Revendications

1. Dispositif de buse (1) pour délivrer des substances fluides avec un support (2) et un élément de buse (4) disposé au moins partiellement à l'intérieur de ce support qui est apte à et prévu pour délivrer la substance fluide, et avec un premier dispositif de couplage (6), pour disposer de manière amovible le dispositif de buse (1) sur un dispositif d'alimentation pour la substance fluide,
**caractérisé en ce que**
le dispositif de buse (1) présente un second dispositif de couplage (8) pour fixer de manière amovible le dispositif de buse (1) à un autre dispositif de buse (1), un élément de piston (48) étant disposé dans l'élément de buse (4) et cet élément de piston (48) étant mobile dans la direction longitudinale (L) du dispositif de buse (1).

2. Dispositif de buse (1) selon la revendication 1,
**caractérisé en ce que**
au moins un dispositif de couplage (6, 8) est disposé sur le support (2).

3. Dispositif de buse (1) selon au moins l'une des revendications précédentes,
**caractérisé en ce que**
le deuxième dispositif de couplage (6) interagit mécaniquement avec le premier dispositif de couplage (8), pour fixer de manière amovible deux dispositifs de buse (1) l'un à l'autre.

4. Dispositif de buse (1) selon au moins l'une des revendications précédentes,
**caractérisé en ce que**
au moins un dispositif de couplage (6, 8) est disposé à l'extrémité du dispositif de buse (1) par rapport à une direction longitudinale (L) du dispositif de buse (1).

5. Dispositif de buse (1) selon la revendication 4,
**caractérisé en ce que**
le deuxième dispositif de couplage (8, 6) est également disposé à l'extrémité du dispositif de buse (1) par rapport à la direction longitudinale.

6. Dispositif de buse (1) selon au moins l'une des revendications précédentes,
**caractérisé en ce que**
le deuxième dispositif de couplage (8) présente au moins une saillie (82) s'étendant dans une direction radiale du dispositif de buse (1).

7. Dispositif de buse (1) selon au moins l'une des revendications précédentes,
**caractérisé en ce que**
le premier dispositif de couplage (6) et le second dispositif de couplage (8) forment conjointement une connexion de type baïonnette.

8. Dispositif de buse (1) selon au moins l'une des revendications précédentes,
**caractérisé en ce que**
le dispositif de buse (1) présente un élément d'étanchéité annulaire (12).

9. Dispositif de buse (1) selon la revendication 8,
**caractérisé en ce que**
l'élément d'étanchéité (12) peut être coincé entre les deux dispositifs à buses (1) dans un état assemblé de deux dispositifs à buses (1).

10. Dispositif de buse (1) selon au moins l'une des revendications précédentes,
**caractérisé en ce que**
au moins une saillie radialement saillante (22) permettant une rotation manuelle du support (2) est disposée sur le support (2).
